(19) Europäisches Patentamt
European Patent Office
Office européen des brevets

(11) **EP 2 117 856 B1**

(12) **EUROPÄISCHE PATENTSCHRIFT**

(45) Veröffentlichungstag und Bekanntmachung des Hinweises auf die Patenterteilung:
**30.05.2012 Patentblatt 2012/22**

(21) Anmeldenummer: **08708280.6**

(22) Anmeldetag: **28.01.2008**

(51) Int Cl.:
**B60H 1/00** *(2006.01)* **B61D 27/00** *(2006.01)*

(86) Internationale Anmeldenummer:
**PCT/EP2008/050960**

(87) Internationale Veröffentlichungsnummer:
**WO 2008/090232 (31.07.2008 Gazette 2008/31)**

(54) **VERFAHREN ZUR KLIMATISIERUNG EINES FAHRZEUGS**

METHOD FOR CLIMATIZING A VEHICLE

PROCÉDÉ DE CLIMATISATION D'UN VÉHICULE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.01.2007 DE 102007005050**

(43) Veröffentlichungstag der Anmeldung:
**18.11.2009 Patentblatt 2009/47**

(73) Patentinhaber: **Bombardier Transportation GmbH 10785 Berlin (DE)**

(72) Erfinder:
• **POISINGER, Josef A-1210 Wien (AT)**

• **KÖNIG, Helmut A-1220 Wien (AT)**

(74) Vertreter: **Cohausz & Florack Patent- und Rechtsanwälte Partnerschaftsgesellschaft Bleichstraße 14 40211 Düsseldorf (DE)**

(56) Entgegenhaltungen:
**EP-A- 0 594 882 WO-A-89/09143
DE-C1- 19 654 633 JP-A- 61 081 217**

**Beschreibung**

Die vorliegende Erfindung betrifft ein Verfahren zur Klimatisierung eines Fahrzeugs, insbesondere eines Schienenfahrzeugs, bei dem einem Innenraum des Fahrzeugs in einem Kühlbetrieb gekühlte Luft als Zuluft zugeführt wird und in einem Heizbetrieb zur gewünschten Beheizung des Innenraums ausreichend erwärmte Luft als Zuluft zugeführt wird, wobei zumindest in dem Heizbetrieb wenigstens ein Teil der Zuluft im Bereich einer Decke des Innenraums zugeführt wird. Weiterhin betrifft die Erfindung ein entsprechendes Fahrzeug, mit dem das erfindungsgemäßen Verfahren durchgeführt werden kann.

Bei den Fahrzeugen, insbesondere bei Schienenfahrzeugen, aus dem öffentlichen Personennahverkehr (ÖPNV) erfolgt die Klimatisierung des Fahrgastraumes häufig über Dachklimageräte. Diese bringen im Sommerbetrieb bzw. Kühlbetrieb die gekühlte Zuluft häufig ausschließlich über die Innendecke in den Innenraum des Fahrzeugs ein. Im Winterbetrieb bzw. im Heizbetrieb wird die beheizte Zuluft meist überausreichend große Kanäle in Bodennähe eingebracht und Abluft im Bereich der Decke abgesaugt, was eine Umkehr der Luftrichtung in den Deckenkanälen zwischen dem Heizbetrieb und dem Kühlbetrieb bedeutet. Diese Lösung hat vor allen Dingen den Nachteil, dass sie den steigenden Hygieneanforderungen bei der Beförderung von Personen nicht gerecht wird, da der im Heizbetrieb durch die Absaugung der Abluft verunreinigte oder gar kontaminierte Deckenkanal zum Einbringen der Zuluft im Kühlbetrieb genutzt wird.

Alternativ wird lediglich vorgewärmte, also zur gewünschten Beheizung des Innenraums nicht ausreichende Zuluft vom Dachklimagerät in den Innenraum eingebracht. Die restliche Beheizung erfolgt dann im Innenraum selbst über zusätzliche, im Innenraum angeordnete Umluftheizgeräte, welche die Luft im Innenraum auf die gewünschte Temperatur bringen. Diese Lösung hat zum einen den Nachteil, dass sie durch die Anbringung der zusätzlichen Umluftheizgeräte nicht den immer schärfer werdenden Anforderungen an den vorbeugenden Brandschutz gerecht werden. Zudem schränken die Umluftheizgeräte den Fahrgastkomfort im Beinbereich ein und stören zum anderen das Innendesign des Fahrgastraums. Schließlich erschweren sie die Reinigung des Fahrgastraumes.

Als weitere Alternative zur Umkehr der Luftrichtung in den Deckenkanälen ist es beispielsweise aus der DE 196 54 633 C1 bekannt, separate Kanäle für die Absaugung der

Abluft bzw. die Rückführung der Umluft zum Dachklimagerät vorzusehen. Diese Lösung hat jedoch den Nachteil, dass sie mit den zusätzlichen Kanälen zusätzlichen baulichen Aufwand erfordert.

Aus der DE 103 04 272 B4 ist als Weiterentwicklung des Fahrzeugs aus der der DE 196 54 633 C1 ein gattungsgemäßes Verfahren zur Klimatisierung eines Fahrzeugs bekannt, bei dem im Heizbetrieb mehr als die Hälfte der erwärmten Zuluft im Bereich des Bodens des Innenraums eingebracht wird, während ein geringerer Teil der erwärmten Zuluft im Bereich der Decke eingebracht wird. Bei dieser Lösung müssen wie auch bei den anderen bekannten Varianten mit einer hauptsächlichen Beheizung über ausreichend erwärmte Zuluft im Bodenbereich einen ausreichend große Kanäle zum Führen der beheizten Zuluft in den Bodenbereich vorgesehen sein, was einen erheblichen Bauaufwand erfordert. Zum anderen, muss auch hier die Absaugung der Abluft bzw. die Rückführung der Umluft zum Dachklimagerät über separate Kanäle erfolgen, was zusätzlichen baulichen Aufwand bedeutet.

Aus der EP 0 594 882, der den nächstliegenden Stand der Technik darstellt, wird ein Verfahren und ein Fahrzeug nach den Oberbegriffen der Ansprüche 1 und 6 offenbart.

Der vorliegenden Erfindung liegt daher die Aufgabe zu Grunde, ein Verfahren bzw. ein Der vorliegenden Erfindung liegt daher die Aufgabe zu Grunde, ein Verfahren bzw. ein Fahrzeug eingangs genannten Art zur Verfügung zu stellen, welches die oben genannten Nachteile nicht oder zumindest in deutlich geringerem Maße aufweist und insbesondere auf einfache und kostengünstige Weise eine zuverlässige Klimatisierung des Innenraums ermöglicht.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einem Fahrzeug gemäß dem Oberbegriff des Anspruchs 6 durch die im kennzeichnenden Teil des Anspruchs 6 angegebenen Merkmale.

Der vorliegenden Erfindung liegt die technische Lehre zu Grunde, dass auf einfache und kostengünstige Weise eine zuverlässige Klimatisierung des Innenraums eines Fahrzeugs ermöglicht, wenn dem Innenraum des Fahrzeugs in dem Heizbetrieb mehr als 50% der Zuluft im Bereich der Decke des Innenraums zugeführt wird. Hiermit ist es möglich, den baulichen Aufwand für die Beheizung des Innenraums gering zu halten. So ist es insbesondere bei der Beheizung ausschließlich über den Deckenbereich vollständig auf Zuluftkanäle, die in andere Bereiche als den Deckenbereich führen, zu verzichten. Dies führt zu einer erheblichen baulichen Vereinfachung des Fahrzeugs.

In jedem Fall ist es möglich, durch die zumindest überwiegende Beheizung im Deckenbereich den Querschnitt von Zuluftkanälen, die in andere Bereiche als den Deckenbereich führen, beispielsweise also von Zuluftkanälen, die in den Bodenbereich führen, klein zu halten und somit den baulichen Aufwand für diese Kanäle zumindest erheblich zu reduzieren.

Gemäß einem ersten Aspekt der Erfindung betrifft diese daher ein Verfahren zur Klimatisierung eines Fahrzeugs, insbesondere eines Schienenfahrzeugs, nach allen Merkmalen des Anspruchs 1.

Eine starke Verringerung des baulichen Aufwands wird erzielt, wenn in dem Heizbetrieb mehr als 80% der Zuluft, vorzugsweise mehr als 90% der Zuluft, im Bereich der Decke zugeführt wird. Ein vollständiger Verzicht auf Zuluftkanäle, die in andere Bereiche als den Deckenbereich führen, ist möglich, wenn in dem Heizbetrieb im Wesentlichen die gesamte Zuluft im Bereich der Decke zugeführt wird.

Die Absaugung der Abluft aus dem Innenraum und gegebenenfalls die Rückführung von Umluft zur erneuten Konditionierung kann auf beliebige geeignete Weise erfolgen. So kann beispielsweise vorgesehen sein, dass die Absaugung wie bei den bekannten Fahrzeugen im Deckenbereich erfolgt. Bevorzugt ist jedoch vorgesehen, dass zumindest ein Teil der Abluft, vorzugsweise mehr als 50% der Abluft, weiter vorzugsweise im Wesentlichen die gesamte Abluft, im Bereich eines Bodens des Innenraums abgeführt wird. Hierfür sind zwar entsprechende Abluftkanäle bzw. Umluftkanäle erforderlich, die Absaugung im Bodenbereich unterstützt aber auch im Heizbetrieb die Ausbildung einer entgegen der natürlichen Konvektion gerichteten Luftströmung vom Deckenbereich zum Bodenbereich.

Diese Luftströmung kann einer unerwünschten, ausgeprägten Temperaturschichtung im Innenraum entgegenwirken und führt damit zu einer von den Fahrgästen als angenehm gleichmäßigen Temperatur im Innenraum. Bevorzugt ist daher vorgesehen, dass zumindest in dem Heizbetrieb der im Bereich der Decke zugeführte Zuluftstrom und der im Bereich des Bodens abgeführten Abluftstrom so groß gewählt ist, dass sich im Innenraum eine, insbesondere kontinuierliche, Luftströmung vom Deckenbereich zum Bodenbereich ausbildet.

Der im Heizbetrieb im Bereich der Decke zugeführte Zuluftstrom kann grundsätzlich beliebig groß gewählt werden, wobei sich dann die Temperatur der Zuluft, die für eine ausreichend schnelle Anpassung der Temperatur im Innenraum an eine Solltemperatur bzw. für ein Halten einer Solltemperatur im Innenraum erforderlich ist, nach der Größe des Zuluftstromes richtet. Vorzugsweise ist zumindest in dem Heizbetrieb der im Bereich der Decke zugeführte Zuluftstrom so groß gewählt, dass die Temperatur der Zuluft zum zügigen Erzielen und/oder zum Halten einer vorgebbaren Solltemperatur in dem Innenraum einen geringen Temperaturunterschied zu der Solltemperatur aufweist. Bevorzugt beträgt der Temperaturunterschied zu der Solltemperatur weniger als 10 K, vorzugsweise weniger als 6 K. Dies hat den Vorteil, dass im Innenraum, zum Beispiel in der Nähe der Zufuhrstellen der Zuluft, keine starken lokalen Temperaturunterschiede auftreten, die von den Passagieren als unangenehm empfunden werden könnten.

Die Verteilung der Zufuhr der Zuluft zum Innenraum kann grundsätzlich auf beliebige geeignete Weise erfolgen. Insbesondere kann vorgesehen sein, dass die Zuluft vergleichsweise konzentriert über schlitzförmige, in Längsrichtung des Fahrzeugs verlaufende Zuluftauslässe in den Innenraum geführt werden, wie dies beispielsweise aus der DE 196 54 633 C1 bekannt ist. Erfindungsgemäß ist jedoch vorgesehen, dass zumindest in dem Heizbetrieb die im Bereich der Decke zugeführte Zuluft großflächig zugeführt wird. Die großflächige Luftzufuhr hat den Vorteil, dass ein großer Luftstrom und damit eine große Wärmemenge transportiert werden kann, ohne dass sich große Strömungsgeschwindigkeiten im Innenraum ergeben, die von den Passagieren als unangenehmer Luftzug empfunden werden könnten. Erfindungsgemäß die großflächige Luftzufuhr so ausgelegt, dass sich in wenigstens 70% des Innenraums, vorzugsweise wenigstens 80% des Innenraums, eine Luftströmung mit einer geringen Strömungsgeschwindigkeit ausbildet, die unterhalb des von Passagieren üblicherweise als unangenehmer Luftzug empfundenen Schwelle liegt.

Zum Druckausgleich für aus der Umgebung des Fahrzeugs angesaugte und der Zuluft beigemengte Frischluft wird ein Teil der aus dem Innenraum abgeführten Abluft als Fortluft aus dem Fahrzeug abgeführt. Dies kann grundsätzlich an beliebiger geeigneter Stelle erfolgen. Bevorzugt ist vorgesehen, dass ein Teil der Abluft im Bereich eines Bodens des Innenraums aus dem Fahrzeug als Fortluft abgeführt wird, da hiermit eine besonders einfache Gestaltung ohne aufwändige Fortluftkanäle erzielt werden kann. Dies gilt natürlich insbesondere dann, wenn auch die Abfuhr der Abluft aus dem Innenraum schon im Bodenbereich erfolgt.

Die vorliegende Erfindung betrifft gemäß einem weiteren Aspekt ein Fahrzeug, insbesondere ein Schienenfahrzeug, mit einem Innenraum und einer Klimatisierungseinrichtung zum Klimatisieren des Innenraums nach allen Merkmalen des Anspruchs 6. In einem Kühlbetrieb führt die Klimatisierungseinrichtung dem Innenraum gekühlte Luft als Zuluft zu. In einem Heizbetrieb führt die Klimatisierungseinrichtung dem Innenraum zur gewünschten Beheizung des Innenraums ausreichend erwärmte Luft als Zuluft zu. Die Klimatisierungseinrichtung führt dabei zumindest in dem Heizbetrieb wenigstens ein Teil der Zuluft über wenigstes einen Zuluftkanal im Bereich einer Decke des Innenraums zu, wobei die Klimatisierungseinrichtung zumindest in dem Heizbetrieb mehr als 50% der Zuluft im Bereich der Decke zuführt. Mit diesem erfindungsgemäßen Fahrzeug lassen sich die oben beschriebenen Varianten und Vorteile in demselben Maße realisieren, sodass hier lediglich auf die obigen Ausführungen verwiesen werden soll.

Für eine großflächige Zufuhr der Zuluft ist erfindungsgemäß vorgesehen, dass im Bereich der Decke ein Zuluftbereich mit Zuluftöffnungen vorgesehen ist, die mit dem wenigstens einen Zuluftkanal verbunden sind, und dass sich der Zuluftbereich in Längsrichtung des Fahrzeugs über wenigstens 70% des Innenraums, vorzugsweise wenigstens 80% des Innenraums, erstreckt und in Querrichtung des Fahrzeugs über wenigstens 30% des Innenraums, vorzugsweise wenigstens 40% des Innenraums, erstreckt.

Die Klimatisierungseinrichtung kann neben den erforderlichen Luftführungen bzw. Luftkanälen grundsätzlich aus beliebigen geeigneten Komponenten in beliebiger verteilter oder zumindest teilweise lokal konzentrierter Anordnung zusammengesetzt sein. Insbesondere können diese Komponenten grundsätzlich an beliebiger geeigneter Stelle im Fahrzeug angeordnet sein. Bevorzugt ist vorgesehen, dass die Klimatisierungseinrichtung eine mit dem wenigstens einen Zuluftkanal verbindbare Konditionierungseinrichtung zum Konditionieren der Zuluft aufweist, wobei die Konditionierungseinrichtung bevorzugt im Dachbereich des Fahrzeugs angeordnet ist.

Weitere bevorzugte Ausgestaltungen der Erfindung ergeben sich aus den Unteransprüchen bzw. der nachstehenden Beschreibung bevorzugter Ausführungsbeispiele, welche auf die beigefügte Zeichnung Bezug nimmt. Es zeigt:

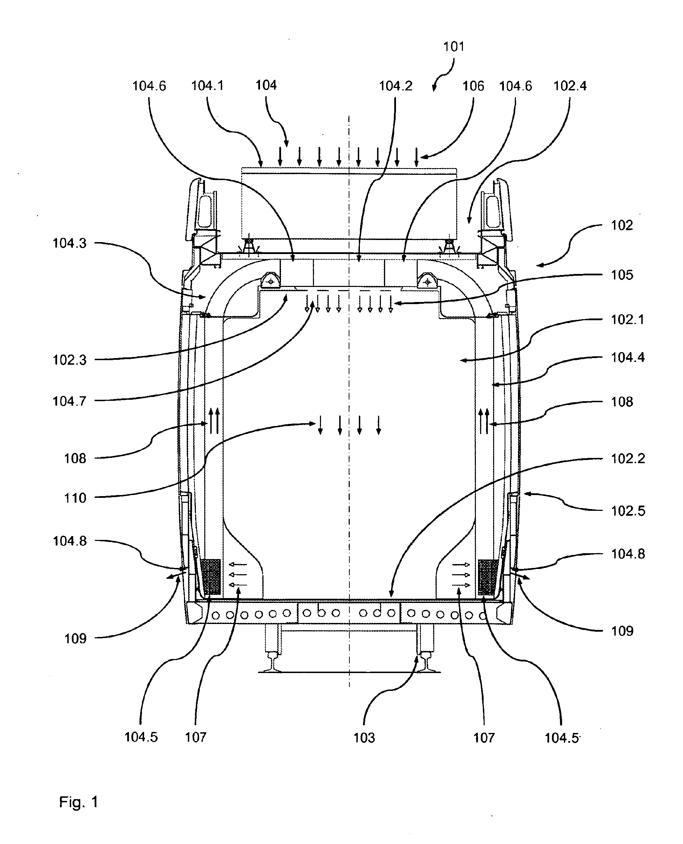

Figur 1    einen schematischen Schnitt durch eine bevorzugte Ausführungsform des erfindungsgemäßen Fahrzeugs mit dem eine bevorzugte Ausführungsform des erfindungsgemäßen Verfahrens durchgeführt werden kann.

Die Figur 1 zeigt einen schematischen Schnitt durch eine bevorzugte Ausführungsform des erfindungsgemäßen Fahrzeugs in Form eines Schienenfahrzeugs 101 mit dem eine bevorzugte Ausführungsform des erfindungsgemäßen Verfahrens zur Klimatisierung des Innenraums eines Fahrzeugs durchgeführt werden kann. Das Schienenfahrzeug 101, hier ein Leichtschienenfahrzeug, umfasst einen Wagenkasten 102, der auf einem oder mehreren Fahrwerken 103 abgestützt ist.

Der Wagenkasten 102 weist einen zum Transport von Passagieren vorgesehenen Innenraum 102.1 mit einem Boden 102.2 und einer Decke 102.3 auf. Weiterhin ist auf dem Dach 102.4 des Wagenkastens als eine Komponente einer Klimatisierungseinrichtung 104 ein kompaktes Dachklimagerät 104.1 angeordnet ist. Die Klimatisierungseinrichtung 104 umfasst weiterhin einen zwischen der Decke 102.3 und dem Dach 102.4 angeordneten zentralen Deckenkanal 104.2 sowie ein Umluftkanalsystem 104.3, dessen Kanäle sich unter anderem bis in den Bereich des Bodens 102.2 erstrecken.

Die Klimatisierungseinrichtung 104 dient dazu, gesteuert durch eine entsprechende (in Figur 1 nicht näher dargestellte) Steuereinrichtung den Innenraum 102.1 entsprechend einem vorgegebenen Temperatursollwert durch Zufuhr entsprechend konditionierter Zuluft 105 zu klimatisieren. Es versteht sich jedoch, dass bei anderen Varianten der Erfindung auch eine Regelung erfolgen kann, die zusätzlich zum Temperatursollwert einen oder mehrere Sollwerte anderer Größen, wie z. B. Luftfeuchtigkeit, Geruchsbelastung etc., heranzieht.

Zur Klimatisierung des Innenraums 102.1 saugt das Dachklimagerät 104.1 gegebenenfalls Frischluft 106 aus der Umgebung des Fahrzeugs 101 an und mischt diese gegebenenfalls in einem geeigneten Verhältnis mit einem ersten Teil der aus dem Innenraum 102.1 abgesaugten Abluft 107, der als Umluft 108 wieder zum Dachklimagerät 104.1 zurückgeführt wird. Der so erhaltene Luftstrom wird in dem Dachklimagerät 104.1 entsprechend der Sollvorgaben konditioniert und dem Innenraum 102.1 als Zuluft 105 zugeführt. Als Ausgleich für eventuell zugeführte Frischluft 106 wird ein zweiter Teil der aus dem Innenraum 102.1 abgesaugten Abluft 107 als Fortluft 109 aus dem Fahrzeug 101 abgeführt.

Die Klimatisierungseinrichtung 104 weist dabei unter anderem als eine Betriebsart einen Kühlbetrieb auf, in welchem dem Innenraum 102.1 zur Kühlung entsprechend gekühlte Zuluft 105 zugeführt wird. Ebenso weist sie als eine weitere Betriebsart einen Heizbetrieb auf, in welchem dem Innenraum 102.1 zur Beheizung entsprechend erwärmte Zuluft 105 zugeführt wird. Die Beheizung des Innenraums 102.1 erfolgt dabei im Wesentlichen ausschließlich über die hierzu ausreichend erwärmte, zugeführte Zuluft 105. Mithin sind also keine zusätzlichen Heizkörper oder dergleichen im Innenraum 102.1 vorgesehen, was im Hinblick auf den vorbeugenden Brandschutz am Fahrzeug 101 von Vorteil ist.

Das Dachklimagerät 104.1 umfasst im vorliegenden Beispiel als kompakte Einheit sämtliche Einrichtungen zur Konditionierung (Heizung, Kühlung, Filterung, Entfeuchtung etc.) der Zuluft 105 sowie sämtliche Einrichtungen zur Förderung (Ventilatoren etc.) der einzelnen Luftströme 105 bis 109. Es versteht sich jedoch, dass bei anderen Varianten der Erfindung auch eine beliebige andere, insbesondere auf beliebige Weise verteilte Anordnung dieser Komponenten im bzw. am Fahrzeug vorgesehen sein kann.

Die Zufuhr der Zuluft 105 zum Innenraum 102.1 erfolgt im gezeigten Beispiel sowohl im Heizbetrieb als auch im Kühlbetrieb im Wesentlichen ausschließlich über den zentralen Deckenkanal 104.2, der hierzu auf geeignete (in Figur 1 nicht näher dargestellte) Weise mit dem Dachklimagerät 104.1 verbunden ist. Mithin wird also sowohl im Heizbetrieb als auch im Kühlbetrieb im Wesentlichen die gesamte Zuluft 105 dem Innenraum 102.1 im Bereich der Decke 102.3 zugeführt.

Durch die im Wesentlichen ausschließliche Zufuhr der Zuluft 105 über den Deckenkanal 104.2 in den beiden Betriebsarten Heizen und Kühlen erübrigt sich im Gegensatz zu den bekannten Fahrzeugen mit vorwiegender Zufuhr der beheizten Zuluft im Bodenbereich ein mehr oder weniger komplexes separates Luftkanalsystem zur Zuführung der beheizten Zuluft im Bodenbereich. Hierdurch kann eine erhebliche Reduktion des baulichen Aufwands für die Klimatisierungseinrichtung 104 erzielt werden.

Es versteht sich jedoch, dass bei anderen Varianten der Erfindung auch vorgesehen sein kann, dass mehr als die Hälfte der beheizten Zuluft im Bereich der Decke des Innenraums zugeführt wird und einen entsprechend kleinerer Teil der beheizten Zuluft an anderer Stelle als im Bereich der Decke des Innenraums zugeführt wird. Gegenüber den bekannten Fahrzeugen besteht dann immer noch der Vorteil, dass das Kanalsystem, welches die beheizte Zuluft in andere Bereiche als den Deckenbereich des Innenraums führt, wegen der geringeren zu fördernden beheizten Luftmenge entsprechend kleiner dimensioniert sein kann. Hierdurch vereinfacht sich die Integration dieses Kanalsystems in die Struktur des Fahrzeugs, beispielsweise in die Seitenwände des Fahrzeugs.

Die Zufuhr der Zuluft 105 zum Innenraum 102.1 erfolgt jeweils so, dass sich im Innenraum 102.1 eine im Wesentlichen kontinuierliche Luftströmung 110 vom Bereich der Decke 102.3 zum Bereich des Bodens 102.2 ausbildet. Dies hat den Vorteil, dass hiermit einer unerwünschten, ausgeprägten Temperaturschichtung im Innenraum 102.1 entgegengewirkt wird und damit eine von den Fahrgästen als angenehm empfundene, gleichmäßige Temperaturverteilung im Innenraum 102.1 erzielt wird.

Während die natürliche Konvektion im Kühlbetrieb mit gegenüber der Luft im Innenraum 102.1 gekühlter Zuluft 105 die Ausbildung der Luftströmung 110 unterstützt, wirkt sie der Ausbildung der Luftströmung 110 im Heizbetrieb mit gegenüber der Luft im Innenraum 102.1 erwärmter Zuluft 105 entgegen. Die Zuluft 105 wird dem Innenraum 102.1 im Heizbetrieb über den Deckenkanal 104.2 als ausreichend großer Luftstrom zugeführt, sodass sich trotz der entgegenwirkenden natürlichen Konvektion im Innenraum 102.1 die Luftströmung 110 ausbildet.

Unterstützt wird die Ausbildung der Luftströmung 110 im vorliegenden Beispiel durch einen entsprechend groß gewählten Abluftstrom, also eine Absaugung der Abluft 107 aus dem Innenraum 102.1, die im vorliegenden Beispiel im Wesentlichen vollständig im Bereich des Bodens 102.2 erfolgt. Es versteht sich jedoch, dass bei anderen Varianten der Erfindung auch vorgesehen sein kann, dass zumindest ein Teil der Absaugung der Abluft auch an anderer Stelle als im Bereich des Bodens des Fahrzeugs erfolgt.

Zur Absaugung der Abluft 107 umfasst das Umluftkanalsystem 104.3 in den Seitenwänden 102.5 des Wagenkastens 102 integrierte erste Umluftkanäle 104.4, die sich von in den Innenraum 102.1 mündenden Absaugöffnungen 104.5 im Bereich des Bodens 102.2 bis in den Bereich der Decke 102.3 erstrecken. Dort münden die ersten Umluftkanäle 104.4 jeweils in einen zweiten Umluftkanal 104.6. Die beiden zweiten Umluftkanäle 104.6 sind zu beiden Seiten des zentralen Deckenkanals 104.2 angeordnet und verlaufen ebenfalls in Längsrichtung des Fahrzeugs 101, sodass sich eine kompakte Anordnung ergibt. Die zweiten Umluftkanäle 104.6 sind ebenfalls in geeigneter (in Figur 1 nicht näher dargestellter) Weise mit dem Dachklimagerät 104.1 verbunden, welches die entsprechende Sogwirkung in dem Umluftkanalsystem 104.3 erzeugt.

Die Absaugöffnungen 104.5 sind bevorzugt über die Länge des Fahrzeugs 101 verteilt angeordnet. Im Bereich jeder Seitenwand 102.5 können weiterhin über die Länge des Fahrzeugs 101 verteilt mehrere erste Umluftkanäle 104.4 vorgesehen sein, die dann jeweils mit einer oder mehreren Absaugöffnungen 104.5 verbunden sind. Ebenso ist es aber möglich, dass auf einer oder beiden Seiten des Fahrzeugs 101 und zusätzlich oder alternativ im Bereich wenigstens eines der Enden des Fahrzeugs 101 nur ein erster Umluftkanal 104.4 vorgesehen ist, der dann mit den Absaugöffnungen 104.5 verbunden ist.

Der im Bereich der Decke 102.3 zugeführte Zuluftstrom ist im vorliegenden Beispiel sowohl in dem Heizbetrieb als auch in dem Kühlbetrieb so groß gewählt, dass die Temperatur $T_{zu}$ der Zuluft 105 zum zügigen Erzielen und/oder zum Halten einer vorgebbaren Solltemperatur $T_{soll}$ in dem Innenraum 102.1 nur einen vergleichsweise geringen Temperaturunterschied $\Delta T$ zu der Solltemperatur $T_{soll}$ aufweisen muss. Bevorzugt beträgt der Temperaturunterschied $\Delta T$ zu der Solltemperatur $T_{soll}$ im Heizbetrieb weniger als 10 K. Im vorliegenden Beispiel beträgt der Temperaturunterschied $\Delta T$ im Heizbetrieb weniger als 6 K, d. h. es gilt:

$$\Delta T = \left| T_{soll} - T_{zu} \right| < 6K \, . \qquad (1)$$

Im vorliegenden Beispiel liegt der Temperaturunterschied $\Delta T$ im Normalbetrieb des Fahrzeugs 101 (ohne extreme Außentemperaturen) etwa bei einem Wert von 4 K bis 5 K. Dies hat den Vorteil, dass im Innenraum 102.1 in der Nähe des Deckenkanals 104.2 keine starken lokalen Temperaturunterschiede auftreten, die von den Passagieren als unangenehm empfunden werden könnten. Es versteht sich, dass diese Vorgaben für den Temperaturunterschied $\Delta T$ gegebenenfalls auch für den Kühlbetrieb gelten können.

Die Zufuhr der Zuluft 105 zum Innenraum 102.1 erfolgt in einem Zuluftbereich 104.7 großflächig verteilt über im Wesentlichen die gesamte Länge (d. h. Abmessung in Längsrichtung des Fahrzeugs 101) des Deckenkanals 104.2. Die großflächige Luftzufuhr wird in dem Zuluftbereich 104.7 durch eine zur Decke 102.3 hin offene Gestaltung des Deckenkanals und eine Gestaltung der Decke 102.3 als Lochdecke mit einer Vielzahl von zum Innenraum 102.3 führenden Auslassöffnungen erzielt.

Diese großflächige Luftzufuhr in dem Zuluftbereich 104.7 hat den Vorteil, dass ein großer Luftstrom und damit eine große Wärmemenge transportiert werden kann, ohne dass sich große Strömungsgeschwindigkeiten für die Strömung 110 im Innenraum ergeben, die von den Passagieren als unangenehmer Luftzug empfunden werden könnten.

Bevorzugt ist der Zuluftbereich 104.7 so ausgelegt, dass sich in wenigstens 70% des Innenraums 102.1, im vorliegenden Beispiel etwa 80% des Innenraums 102.1, eine Luftströmung 110 ausbildet, die eine Strömungsgeschwindigkeit aufweist, die unterhalb der von Passagieren üblicherweise als unangenehmer Luftzug empfundenen Schwelle liegt. Derartige Geschwindigkeitsschwellen sind in der Regel durch entsprechende nationale oder internationale Normen, Vorgaben des Betreibers des Schienenfahrzeugs oder dergleichen vorgegeben.

Um die beschriebene großflächige Luftzufuhr zu erzielen, erstreckt sich der Zuluftbereich 104.7 in Längsrichtung des Fahrzeugs 101 bevorzugt über wenigstens 70% des Innenraums, im vorliegenden Beispiel etwa über 80% des Innenraums 102.1, und in Querrichtung des Fahrzeugs 101 über wenigstens 30% des Innenraums, im vorliegenden Beispiel etwa über 40% der Breite des Innenraums 102.1.

Wie bereits erwähnt, wird Druckausgleich für die im Dachklimagerät 104.1 beigemengte Frischluft 106 ein Teil der aus dem Innenraum 102.1 abgeführten Abluft 107 als Fortluft 109 aus dem Fahrzeug abgeführt. Im vorliegenden Beispiel erfolgt dies durch mit den ersten Umluftkanälen 104.4 verbundene Fortluftöffnungen 104.8 in den Seitenwänden 102.5 des Wagenkastens 102. Die Fortluftöffnungen 104.8 sind ebenfalls im Bereich des Bodens 102.2 angeordnet, um eine möglichst einfache Gestaltung ohne aufwändige Fortluftkanäle zu erzielen.

Die Fortluftöffnungen 104.8 sind durch die Innenverkleidung des Innenraums 102.1, Sitzkonsolen im Innenraum 102.1 oder dergleichen verdeckt angeordnet. Sie sind möglichst gleichmäßig über die Länge des Fahrzeugs 101 verteilt, wobei sie so angeordnet sind, dass der Schalleintrag in den Innenraum 102.1, insbesondere im Bereich des Fahrwerks 103, so gering wie möglich ist.

Die vorliegende Erfindung wurde vorstehend ausschließlich anhand von Beispielen aus dem Bereich der Leichtschienenfahrzeuge beschrieben. Es versteht sich jedoch, dass die Erfindung auch in Verbindung mit beliebigen anderen Schienenfahrzeugen aber auch mit anderen Fahrzeugen, beispielsweise Kraftfahrzeugen, zum Einsatz kommen kann.

**Patentansprüche**

1. Verfahren zur Klimatisierung eines Fahrzeugs, insbesondere eines Schienenfahrzeugs, bei dem

   - einem Innenraum (102.1) des Fahrzeugs (101) in einem Kühlbetrieb gekühlte Luft als Zuluft (105) zugeführt wird und in einem Heizbetrieb erwärmte Luft als Zuluft (105) zugeführt wird, wobei
   - zumindest in dem Heizbetrieb mehr als 50% der Zuluft (105) im Bereich einer Decke (102.3) des Innenraums zugeführt wird,
   **dadurch gekennzeichnet, dass**
   - zumindest in dem Heizbetrieb die im Bereich der Decke (102.3) zugeführte Zuluft (105) großflächig über einen Zuluftbereich (104.7) zugeführt wird, der sich in Längsrichtung des Fahrzeugs (101) über wenigstens 70% des Innenraums (102.1), vorzugsweise wenigstens 80% des Innenraums (102.1), und in Querrichtung des Fahrzeugs (101) über wenigstens 30% des Innenraums (102.1), vorzugsweise wenigstens 40% des Innenraums (102.1), erstreckt, sodass sich in wenigstens 70% des Innenraums (102.1), vorzugsweise wenigstens 80% des Innenraums (102.1), eine Luftströmung (110) mit einer geringen Strömungsgeschwindigkeit ausbildet, wobei
   - die Strömungsgeschwindigkeit der Luftströmung (110) insbesondere unterhalb einer von Passagieren als unangenehmer Luftzug empfundenen Schwelle liegt.

2. Verfahren nach Anspruch 1, **dadurch gekennzeichnet, dass**

   - zumindest in dem Heizbetrieb mehr als 80% der Zuluft (105), vorzugsweise mehr als 90% der Zuluft (105), im Bereich der Decke (102.3) zugeführt wird, wobei
   - insbesondere zumindest in dem Heizbetrieb im Wesentlichen die gesamte Zuluft (105) im Bereich der Decke (102.3) zugeführt wird.

3. Verfahren nach einem der Ansprüche 1 oder 2, **dadurch gekennzeichnet, dass**

   - Abluft (107) aus dem Innenraum (102.1) abgeführt wird, wobei
   - zumindest ein Teil der Abluft (107), vorzugsweise mehr als 50% der Abluft (107), weiter vorzugsweise im Wesentlichen die gesamte Abluft (107), im Bereich eines Bodens (102.2) des Innenraums (102.1) abgeführt wird, wobei
   - insbesondere zumindest in dem Heizbetrieb der im Bereich der Decke (102.3) zugeführte Zuluftstrom (105) und der im Bereich des Bodens (102.2) abgeführten Abluftstrom (107) so groß gewählt ist, dass sich im Innenraum (102.1) eine, insbesondere kontinuierliche, Luftströmung (110) vom Deckenbereich (102.3) zum Bodenbereich (102.2) ausbildet.

4. Verfahren nach einem der vorhergehenden Ansprüche, **dadurch gekennzeichnet, dass**

   - zumindest in dem Heizbetrieb der im Bereich der Decke (102.3) zugeführte Zuluftstrom (105) so groß gewählt ist, dass die Temperatur der Zuluft (105) zum zügigen Erzielen und/oder zum Halten einer vorgebbaren Solltemperatur in dem Innenraum einen geringen Temperaturunterschied zu der Solltemperatur aufweist, wobei
- der Temperaturunterschied insbesondere weniger als 10 K, vorzugsweise weniger als 6 K, beträgt.

5. Verfahren nach einem der vorhergehenden Ansprüche, **dadurch gekennzeichnet, dass** Abluft (107) aus dem Innenraum (102.1) abgeführt wird und ein Teil der Abluft (107) im Bereich eines Bodens (102.2) des Innenraums (102.1) aus dem Fahrzeug (101) als Fortluft (109) abgeführt wird.

6. Fahrzeug, insbesondere Schienenfahrzeug, mit

   - einem Innenraum (102.1) und einer Klimatisierungseinrichtung (104) zum Klimatisieren des Innenraums (102.1), wobei
   - die Klimatisierungseinrichtung (104) dem Innenraum (102.1) in einem Kühlbetrieb gekühlte Luft als Zuluft (105) zuführt und in einem Heizbetrieb erwärmte Luft als Zuluft (105) zuführt,
   - die Klimatisierungseinrichtung (104) zumindest in dem Heizbetrieb mehr als 50% der Zuluft (105) über wenigstes einen Zuluftkanal (104.2) im Bereich einer Decke (102.3) des Innenraums (102.1) zuführt, wobei
   - im Bereich der Decke (102.3) ein Zuluftbereich (104.7) mit Zuluftöffnungen vorgesehen ist, die mit dem wenigstens einen Zuluftkanal (104.2) verbunden sind, und
   - sich der Zuluftbereich (104.7) in Längsrichtung des Fahrzeugs (101) über wenigstens 70% des Innenraums (102.1), vorzugsweise wenigstens 80% des Innenraums (102.1), erstreckt,
   **dadurch gekennzeichnet, dass**
   - sich der Zuluftbereich (104.7) zur großflächigen Zufuhr der Zuluft (105) in Querrichtung des Fahrzeugs (101) über wenigstens 30% des Innenraums (102.1), vorzugsweise wenigstens 40% des Innenraums (102.1), erstreckt.

7. Fahrzeug nach Anspruch 6, **dadurch gekennzeichnet, dass**

   - die Klimatisierungseinrichtung (104) zumindest in dem Heizbetrieb mehr als 80% der Zuluft (105), vorzugsweise mehr als 90% der Zuluft (105), im Bereich der Decke (102.3) zuführt, wobei
   - die Klimatisierungseinrichtung (104) insbesondere zumindest in dem Heizbetrieb im Wesentlichen die gesamte Zuluft (105) im Bereich der Decke (102.3) zuführt.

8. Fahrzeug nach einem der Ansprüche 6 oder 7, **dadurch gekennzeichnet, dass**

   - die Klimatisierungseinrichtung (104) Abluft (107) aus dem Innenraum (102.1) abführt, wobei
   - die Klimatisierungseinrichtung (104) zumindest einen Teil der Abluft (107), vorzugsweise mehr als 50% der Abluft (107), weiter vorzugsweise im Wesentlichen die gesamte Abluft (107), über Abluftöffnungen (104.5) im Bereich eines Bodens (102.2) des Innenraums (102.1) abführt, wobei
   - insbesondere zumindest in dem Heizbetrieb der im Bereich der Decke (102.3) zugeführte Zuluftstrom (105) und der im Bereich des Bodens (102.2) abgeführte Abluftstrom (107) so groß gewählt ist, dass sich im Innenraum (102.1) eine, insbesondere kontinuierliche; Luftströmung (110) vom Deckenbereich (102.3) zum Bodenbereich (102.2) ausbildet.

9. Fahrzeug nach einem der Ansprüche 6 bis 8, **dadurch gekennzeichnet, dass**

   - zumindest in dem Heizbetrieb der im Bereich der Decke (102.3) zugeführte Zuluftstrom (105) so groß gewählt ist, dass die Temperatur der Zuluft (105) zum zügigen Erzielen und/oder zum Halten einer vorgebbaren Solltemperatur in dem Innenraum (102.1) einen geringen Temperaturunterschied zu der Solltemperatur aufweist, wobei
   - der Temperaturunterschied insbesondere weniger als 10 K, vorzugsweise weniger als 6 K, beträgt.

10. Fahrzeug nach einem der Ansprüche 6 bis 9, **dadurch gekennzeichnet, dass**

    - die Klimatisierungseinrichtung (104) zumindest in dem Heizbetrieb die im Bereich der Decke (102.3) zugeführte Zuluft (105) großflächig zuführt, sodass sich in wenigstens 70% des Innenraums (102.1), vorzugsweise wenigstens 90% des Innenraums (102.1), eine Strömung (110) mit einer geringen Strömungsgeschwindigkeit ausbildet, wobei
    - die Strömungsgeschwindigkeit der Luftströmung (110) insbesondere unterhalb einer von Passagieren als unangenehmer Luftzug empfundenen Schwelle liegt.

11. Fahrzeug nach einem der Ansprüche 6 bis 10, **dadurch gekennzeichnet, dass** die Klimatisierungseinrichtung (104) Abluft (107) aus dem Innenraum (102.1) abführt und einen Teil der Abluft (107) im Bereich eines Bodens (102.2) des Innenraums (102.1) über Fortluftöffnungen (104.8) aus dem Fahrzeug (101) als Fortluft (109) abführt.

12. Fahrzeug nach einem der Ansprüche 6 bis 11, **dadurch gekennzeichnet, dass**

   - die Klimatisierungseinrichtung (104) eine mit dem wenigstens einen Zuluftkanal (104.2) verbindbare Konditionierungseinrichtung (104.1) zum Konditionieren der Zuluft (105) aufweist, wobei
   - die Konditionierungseinrichtung (104.1) insbesondere im Dachbereich (102.4) des Fahrzeugs (101) angeordnet ist.

13. Fahrzeug nach Anspruch 12, **dadurch gekennzeichnet, dass**

   - die Klimatisierungseinrichtung (104) über Abluftöffnungen (104.5) Abluft (107) aus dem Innenraum (102.1) abführt und
   - wenigstens ein mit den Abluftöffnungen (104.5) und der Konditionierungseinrichtung (104.1) verbundener Umluftkanal (104.4, 104.6) zum Rückführen von Umluft (108) zu der Konditionierungseinrichtung (104.1) vorgesehen ist, wobei
   - zumindest ein Teil (104.4) des Umluftkanals (104.4, 104.6) insbesondere im Bereich einer Seitenwand (102.5) des Fahrzeugs (101) ausgebildet ist.

14. Fahrzeug nach Anspruch 13, **dadurch gekennzeichnet, dass** zumindest ein Teil (104.6) des Umluftkanals (104.4, 104.6) neben dem wenigstens einen Zuluftkanal (104.2) angeordnet ist.

**Claims**

1. Method for climatizing a vehicle, in particular a rail vehicle, in which,

   - in a cooling operating mode, cooled air and, in a heating operating mode, heated air is supplied as incoming air (105) to an interior space (102.1) of the vehicle (101), wherein,
   - at least in the heating operating mode, more than 50% of the incoming air (105) is supplied in the area of a ceiling (102.3) of the interior space,
   **characterised in that**,
   - at least in the heating operating mode, the incoming air (105) supplied in the area of the ceiling (102.3) is supplied extensively over an incoming air area (104.7) which in the longitudinal direction of the vehicle (101) extends over at least 70% of the interior space (102.1), preferably at least 80% of the interior space (102.1), and in the transverse direction of the vehicle (101) extends over at least 30% of the interior space (102.1), preferably at least 40% of the interior space (101), so that an air flow (110) with a low flow speed is formed in at least 70% of the interior space (102.1), preferably at least 80% of the interior space (102.1), wherein
   - the flow speed of the air flow (110) is in particular below a threshold perceived by passengers as an uncomfortable draught.

2. Method according to claim 1, **characterised in that**

   - at least in the heating operating mode more than 80% of the incoming air (105), preferably more than 90% of the incoming air (105), is supplied in the area of the ceiling (102.3), wherein,
   - in particular, at least in the heating operating mode, essentially the entire incoming air (105) is supplied in the area of the ceiling (102.3).

3. Method according to any one of claims 1 and 2, **characterised in that**

   - outgoing air (107) is discharged from the interior space (102.1), wherein
   - at least a part of the outgoing air (107), preferably more than 50% of the outgoing air (107), more preferably essentially the entire outgoing air (107), is discharged in the area of a floor (102.2) of the interior space (102.1), wherein,

- in particular, at least in the heating operating mode, the incoming air flow (105) supplied in the area of the ceiling (102.3) and the outgoing air flow (107) discharged in the area of the floor (102.2) are chosen so that they are large enough for an, in particular continuous, air flow (110) to form in the interior space (102.1) from the ceiling area (102.3) to the floor area (102.2).

4.  Method according to any one of the preceding claims, **characterised in that**,

    - at least in the heating operating mode, the incoming air flow (105) supplied in the area of the ceiling (102.3) is chosen so that, for quickly obtaining and/or maintaining a pre-determinable desired temperature in the interior space, it is large enough for the difference in temperature between the temperature of the incoming air (105) and the desired temperature to be low, wherein
    - the difference in temperature, in particular, is less than 10 K, preferably less than 6 K.

5.  Method according to any one of the preceding claims, **characterised in that** outgoing air (107) is discharged from the interior space (102.1) and a part of the outgoing air (107), in an area of a floor (102.2) of the interior space (102.1), is discharged from the vehicle (101) as exhaust air (109).

6.  Vehicle, in particular a rail vehicle, having

    - an interior space (102.1) and an air-conditioning device (104) for climatizing the interior space (102.1), wherein
    - the air-conditioning device (104), in a cooling operating mode, supplies cooled air as incoming air (105) and, in a heating operating mode, supplies heated air as incoming air (105) to the interior space (102.1),
    - the air-conditioning device (104), at least in the heating operating mode, supplies more than 50% of the incoming air (105) via at least one incoming air conduit (104.2) in an area of a ceiling (102.3) of the interior space (102.1), wherein
    - in the area of the ceiling (102.3) an incoming air area (104.7) is provided with incoming air openings which are connected to the at least one incoming air conduit (104.2) and
    - the incoming air area (104.7), in the longitudinal direction of the vehicle (101), extends over at least 70% of the interior space (102.1), preferably at least 80% of the interior space (102.1),
    **characterised in that**
    - the incoming air area (104.7), for extensively supplying the incoming air (105), in the transverse direction of the vehicle (101) extends over at least 30% of the interior space (102.1), preferably at least 40% of the interior space (102.1).

7.  Vehicle according to claim 6, **characterised in that**

    - the air-conditioning device (104), at least in the heating operating mode, supplies more than 80% of the incoming air (105), preferably more than 90% of the incoming air (105), in the area of the ceiling (102.3), wherein
    - the air-conditioning device (104), in particular, at least in the heating operating mode, supplies essentially the entire incoming air (105) in the area of the ceiling (102.3).

8.  Vehicle according to any one of claims 6 and 7, **characterised in that**

    - the air-conditioning device (104) discharges outgoing air (107) from the interior space (102.1), wherein
    - the air-conditioning device (104) discharges at least a part of the outgoing air (107), preferably more than 50% of the outgoing air (107), more preferably essentially the entire outgoing air (107), via discharge openings (104.5) in the area of a floor (102.2) of the interior space (102.1), wherein,
    - in particular, at least in the heating operating mode, the incoming air flow (105) supplied in the area of the ceiling (102.3) and the outgoing air flow (107) discharged in the area of the floor (102.2) are chosen so that they are large enough for an, in particular continuous, air flow (110) to form in the interior space (102.1) from the area of the ceiling (102.3) to the area of the floor (102.2).

9.  Vehicle according to any one of claims 6 to 8, **characterised in that**,

    - at least in the heating operating mode, the incoming air flow (105) supplied in the area of the ceiling (102.3) is chosen so that, for quickly obtaining and/or maintaining a pre-determinable desired temperature in the interior space (102.1), it is large enough for the difference in temperature between the temperature of the incoming air (105) and the desired temperature to be low, wherein

- the difference in temperature, in particular, is less than 10 K, preferably less than 6 K.

**10.** Vehicle according to any one of claims 6 to 9, **characterised in that**,

- at least in the heating operating mode, the air-conditioning device (104) supplies the incoming air (105) supplied in the area of the ceiling (102.3) extensively, so that a flow (110) with a low flow speed is formed in at least 70% of the interior space (102.1), preferably at least 90% of the interior space (102.1), wherein
- the flow speed of the air flow (110), in particular, is below a threshold perceived by passengers as an uncomfortable draught.

**11.** Vehicle according to any one of claims 6 to 10, **characterised in that** the air-conditioning device (104) discharges outgoing air (107) from the interior space (102.1) and discharges a part of the outgoing air (107) in the area of a floor (102.2) of the interior space (102.1) from the vehicle (101) via exhaust openings (104.8) as exhaust air (109).

**12.** Vehicle according to any one of claims 6 to 11, **characterised in that**

- the air-conditioning device (104) has a conditioning device (104.1) for conditioning the incoming air (105), which can be connected to at least one incoming air conduit (104.2), wherein
- the conditioning device (104.1), in particular, is located in the roof area (102.4) of the vehicle (101).

**13.** Vehicle according to claim 12, **characterised in that**

- the air-conditioning device (104) discharges outgoing air (107) from the interior space (102.1) via discharge openings (104.5) and
- at least one circulating air conduit (104.4, 104.6) connected to the discharge openings (104.5) and the conditioning device 104.1) is provided for feeding circulating air (108) back to the conditioning device (104.1), wherein
- at least one part (104.4) of the circulating air conduit (104.4, 104.6), in particular, is formed in the area of a side wall (102.5) of the vehicle (101).

**14.** Vehicle according to claim 18, **characterised in that** at least a part (104.6) of the circulating air conduit (104.4, 104.6) is located next to the at least one incoming air conduit (104.2).

**Revendications**

**1.** Procédé pour climatiser un véhicule, en particulier un véhicule ferroviaire, dans lequel,

- dans un mode de fonctionnement de refroidissement, de l'air refroidi et, dans un mode de fonctionnement de chauffage, de l'air chauffé est fourni comme air d'entrée (105) à un espace intérieur (102.1) du véhicule (101), où,
- au moins en mode de fonctionnement de chauffage, plus de 50% de l'air d'entrée (105) est fourni dans la zone d'un plafond (102.3) de l'espace intérieur, **caractérisé en ce que**,
- au moins en mode de fonctionnement de chauffage, l'air d'entrée (105) fourni dans la zone du plafond (102.3) est fourni extensivement sur une zone d'air d'entrée (104.7) qui, dans la direction longitudinale du véhicule (101), s'étend sur au moins 70% de l'espace intérieur (102.1), de préférence au moins 80% de l'espace intérieur (102.1), et, dans la direction transversale du véhicule (101), s'étend sur au moins 30% de l'espace intérieur (102.1), de préférence au moins 40% de l'espace intérieur (101), de sorte qu'un écoulement d'air (110) avec une faible vitesse d'écoulement se forme dans au moins 70% de l'espace intérieur (102.1), de préférence dans au moins 80% de l'espace intérieur (102.1), où
- la vitesse d'écoulement de l'écoulement d'air (110) est, en particulier, en dessous d'un seuil perçu par les passagers comme un courant d'air inconfortable.

**2.** Procédé selon la revendication 1, **caractérisé en ce que**,

- au moins en mode de fonctionnement de chauffage, plus de 80% de l'air d'entrée (105), de préférence plus de 90% de l'air d'entrée (105), est fourni dans la zone du plafond (102.3), où,
- en particulier, au moins en mode de fonctionnement de chauffage, essentiellement la totalité de l'air d'entrée (105) est fournie dans la zone du plafond (102.3).

**3.** Procédé selon l'une quelconque des revendications 1 et 2, **caractérisé en ce que**

- de l'air de sortie (107) est évacué de l'espace intérieur (102.1), où,
- au moins une partie de l'air de sortie (107), de préférence plus de 50% de l'air de sortie (107), mieux encore essentiellement la totalité de l'air de sortie (107), est évacuée dans la zone d'un plancher (102.2) de l'espace intérieur (102.1), où,
- en particulier, au moins en mode de fonctionnement de chauffage, l'écoulement d'air d'entrée (105) fourni dans la zone du plafond (102.3) et l'écoulement d'air de sortie (107) évacué dans la zone du plancher (102.2) sont choisis de sorte qu'ils soient suffisamment larges pour qu'un écoulement d'air (110), en particulier continu, se forme dans l'espace intérieur (102.1) de la zone du plafond (102.3) à la zone du plancher (102.2).

**4.** Procédé selon une quelconque des revendications précédentes, **caractérisé en ce que**

- au moins en mode de fonctionnement de chauffage, l'écoulement d'air d'entrée (105) fourni dans la zone du plafond (102.3) est choisi de sorte qu'il soit suffisamment large pour que, pour obtenir rapidement et/ou pour maintenir une température prédéterminable désirée à l'espace intérieur, la différence de température entre la température de l'air d'entrée (105) et la température désirée soit faible, où
- la différence de température est, en particulier, inférieure à 10 K, de préférence inférieure à 6 K.

**5.** Procédé selon une quelconque des revendications précédentes, **caractérisé en ce que** l'air de sortie (107) est évacué de l'espace intérieur (102.1) et une partie de l'air de sortie (107), dans la zone d'un plancher (102.2) de l'espace intérieur (102.1), est évacuée du véhicule (101) comme air évacué (109).

**6.** Véhicule, en particulier véhicule ferroviaire, ayant

- un espace intérieur (102.1) et un dispositif de climatisation (104) pour climatiser l'espace intérieur (102.1), où
- le dispositif de climatisation (104), dans un mode de fonctionnement de refroidissement, fournit de l'air refroidi comme air d'entrée (105) et, dans un mode de fonctionnement de chauffage, fournit de l'air chauffé comme air d'entrée (105) vers l'espace intérieur (102.1),
- le dispositif de climatisation (104), au moins en mode de fonctionnement de chauffage, fournit plus de 50% de l'air d'entrée (105) via au moins un conduit d'air d'entrée (104.2) dans la zone d'un plafond (102.3) de l'espace intérieur (102.1), où
- dans la zone du plafond (102.3), une zone d'air d'entrée (104.7) est pourvue d'ouvertures d'air d'entrée qui sont reliées à l'au moins un conduit d'air d'entrée (104.2) et
- la zone d'air d'entrée (104.7) dans la direction longitudinale du véhicule (101) s'étend sur au moins 70% de l'espace intérieur (102.1), de préférence au moins 80% de l'espace intérieur (102.1),
**caractérisé en ce que**
- la zone d'air d'entrée (104.7), pour fournir extensivement l'air d'entrée (105), dans la direction transversale du véhicule (101) s'étend sur au moins 30% de l'espace intérieur (102.1), de préférence au moins 40% de l'espace intérieur (102.1).

**7.** Véhicule selon la revendication 6, **caractérisé en ce que**

- le dispositif de climatisation (104), au moins en mode de fonctionnement de chauffage, fournit plus de 80% de l'air d'entrée (105), de préférence plus de 90% de l'air d'entrée (105), dans la zone du plafond (102.3), où
- le dispositif de climatisation (104), en particulier, au moins en mode de fonctionnement de chauffage, fournit essentiellement la totalité de l'air d'entrée (104) dans la zone du plafond (102.3).

**8.** Véhicule selon l'une ou l'autre des revendications 6 et 7, **caractérisé en ce que**

- le dispositif de climatisation (104) évacue l'air de sortie (107) de l'espace intérieur (102.1), où
- le dispositif de climatisation (104) évacue au moins une partie de l'air de sortie (107), de préférence plus de 50% de l'air de sortie (107), mieux encore essentiellement la totalité de l'air de sortie (107), via des ouvertures d'évacuation (104.5), dans la zone d'un plancher (102.2) de l'espace intérieur (102.1), où,
- en particulier, au moins en mode de fonctionnement de chauffage, l'écoulement d'air d'entrée (105) fourni dans la zone du plafond (102.3) et l'écoulement d'air de sortie (107) évacué dans la zone de plancher (102.2) sont choisis de sorte qu'ils soient suffisamment larges pour qu'un un écoulement d'air (110), en particulier continu, se forme dans l'espace intérieur (102.1) de la zone du plafond (102.3) à la zone du plancher (102.2).

9. Véhicule selon une quelconque des revendications de 6 à 8, **caractérisé en ce que**,

- au moins en mode de fonctionnement de chauffage, l'écoulement d'air d'entrée (105) fourni dans la zone du plafond (102.3) est choisi de sorte qu'il soit suffisamment large pour que, pour obtenir rapidement et/ou pour maintenir une température prédéterminable désirée à l'espace intérieur (102.1), la différence de température entre la température de l'air d'entrée (105) et la température désirée soit faible, où
- la différence de température est, en particulier, inférieure à 10 K, de préférence inférieure à 6 K.

10. Véhicule selon une quelconque des revendications de 6 à 9, **caractérisé en ce que**,

- au moins en mode de fonctionnement de chauffage, le dispositif de climatisation (104) fournit l'air d'entrée (105) fourni dans la zone du plafond (102.3) extensivement, de sorte qu'un écoulement (110) avec une faible vitesse d'écoulement se forme dans au moins 70% de l'espace intérieur (102.1), de préférence au moins 90% de l'espace intérieur (102.1), où
- la vitesse d'écoulement de l'écoulement d'air (110) est, en particulier, en dessous d'un seuil perçu par les passagers comme un courant d'air inconfortable.

11. Véhicule selon une quelconque des revendications 6 à 10, **caractérisé en ce que** le dispositif de climatisation (104) évacue l'air de sortie (107) de l'espace intérieur (102.1) et évacue une partie de l'air de sortie (107) dans une zone d'un plancher (102.2) de l'espace intérieur (102.1) à partir du véhicule (101) via des ouvertures d'évacuation (104.8) comme air évacué (109).

12. Véhicule selon une quelconque des revendications de 6 à 11, **caractérisé en ce que**

- le dispositif de climatisation (104) a un dispositif de conditionnement (104.1) pour conditionner l'air d'entrée (105), qui peut être relié à l'au moins un conduit d'air d'entrée (104.2), où
- le dispositif de conditionnement (104.1) est, en particulier, situé dans la zone de toit (102.4) du véhicule (101).

13. Véhicule selon la revendication 12, **caractérisé en ce que**

- le dispositif de climatisation (104) évacue l'air de sortie (107) de l'espace intérieur (102.1) via des ouvertures d'évacuation (104.5) et
- au moins un conduit d'air en circulation (104.4, 104.6) relié aux ouvertures d'évacuation (104.5) et au dispositif de conditionnement (104.1) est prévu pour alimenter l'air en circulation (108) en retour vers le dispositif de conditionnement (104.1), où
- au moins une partie (104.4) du conduit d'air en circulation (104.4, 104.6) est, en particulier, formée dans la zone d'une paroi latérale (102.5) du véhicule (101).

14. Véhicule selon la revendication 13, **caractérisé en ce qu'**au moins une partie (104.6) du conduit d'air en circulation (104.4, 104.6) est située près de l'au moins un conduit d'air d'entrée (104.2).

Fig. 1

**EP 2 117 856 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19654633 C1
- DE 10304272 B4
- EP 0594882 A